# EUROPEAN PATENT SPECIFICATION

(11) **EP 2 700 032 B1**
(45) Date of publication and mention of the grant of the patent: **16.03.2016**
(21) Application number: 12727179.9
(22) Date of filing: 23.04.2012
(51) Int. Cl.: G08G 1/096, G08G 1/04, G08G 1/087, G08G 1/0967, G08G 1/0968, G08G 1/16, H04N 13/02

(54) **A COMPREHENSIVE AND INTELLIGENT SYSTEM FOR MANAGING TRAFFIC AND EMERGENCY SERVICES**
UMFASSENDES, INTELLIGENTES SYSTEM ZUR VERWALTUNG VON VERKEHRS- UND NOTDIENSTEN
SYSTÈME GLOBAL ET INTELLIGENT POUR GÉRER CIRCULATION ET SERVICES D'URGENCE

(30) Priority: 22.04.2011 US 201161478380 P
(43) Date of publication of application: 26.02.2014
(73) Proprietor: F3M3 Companies, Inc., Miramar, FL 33027 (US)
(72) Inventor: DANIEL, Isaac, S., Miramar, FL 33025 (US)
(74) Representative: Casey, Lindsay Joseph
(86) International application number: PCT/US2012/034710
(87) International publication number: WO 2012/145761

(56) References cited:
- EP-A1- 2 182 501
- EP-A2- 1 615 190
- WO-A1-01/37241
- WO-A2-2005/003885
- FR-A1- 2 562 694
- JP-A- 2005 284 473
- US-A- 5 983 161
- US-A1- 2009 224 942
- US-A1- 2010 100 325

## Description

### FIELD

The present disclosure relates generally to electronic systems and methods, and particularly to systems and methods for the management of ground traffic and emergency services.

### BACKGROUND

Traffic is a common problem shared by cities all over the world. This problem is getting progressively worse with the ever increasing number vehicles on the road, as well as the growing number of distractions to drivers, perhaps the most dangerous one being cell phones. This is a problem that results in a significant number of deaths, injuries and monetary loss, often to completely innocent people. It also involves a significant cost to the municipalities responding to these incidents.

One of the factors that contribute to traffic is the management of traffic signals, and how cars respond to traffic signals. Traditionally, drivers are alerted as to the status of the traffic signals via different color lights, namely, red to stop, yellow to clear the intersection, and green to go. Because the time it takes a traffic signal to change from yellow to red varies according to municipality and state, it is often difficult for drivers to determine whether they should speed up to clear the intersection or slow down to stop. This hesitation, and subsequent action, causes many accidents, which often times cause more traffic and prevent emergency services from reaching not only a scene of a particular accident, but also from helping out in unrelated emergency situations, such as fires, and the like. Furthermore, drivers consume more fuel and cause brake wear when they mistakenly believe they can pass through a yellow light by speeding up, only to thereafter have to come to an abrupt stop because of their miscalculation.

Another deleterious effect traffic has is on emergency services, particularly when the difference between life and death can be a matter of minutes. There is no accurate way for emergency service providers to assess situations on the road, including a scene of emergency they are responding to. Municipalities sometime overestimate the severity of traffic accidents and incur unnecessary expenses by sending too many resources or emergency responders to the scene of an accident. On the other hand, sometimes municipalities underestimate the severity of traffic accidents and do not provide enough resources or emergency responders, which can ultimately lead to further injury or death to the accident victims.

United States patent specification no US-A-5 983 161 discloses a GPS vehicle collision avoidance warning and control system and method wherein GPS satellite ranging signals received on comm1, and DGPS auxiliary range correction signals and pseudolite carrier phase ambiguity resolution signals from a fixed known earth base station received on comm2, at one of a plurality of vehicles/aircraft/automobiles are computer processed to continuously determine the one's kinematic tracking position on a pathway with centimeter accuracy. That GPS-based position is communicated with selected other status information to each other one of the plurality of vehicles, to the one station, and/or to one of a plurality of control centers, and the one vehicle receives therefrom each of the others' status information and kinematic tracking position. Objects are detected from all directions by multiple supplemental mechanisms, e.g., video, radar/lidar, laser and optical scanners. Data and information are computer processed and analyzed in neural networks in the one vehicle to identify, rank, and evaluate collision hazards/objects, an expert operating response to which is determined in a fuzzy logic associative memory which generates control signals which actuate a plurality of control systems of the one vehicle in a coordinated manner to maneuver it laterally and longitudinally to avoid each collision hazard, or, for motor vehicles, when a collision is unavoidable, to minimize injury or damage therefrom. The operator is warned by a heads up display and other modes and may override. An automotive auto-pilot mode is provided.

### SUMMARY

According to an aspect of the present invention, there is provided a comprehensive and intelligent traffic and emergency services management system as specified in claim 1. According to another aspect of the present invention, there is provided a comprehensive and intelligent traffic and emergency services management system as specified in any of claims 2 - 14.

The various embodiments of systems disclosed herein result from the realization that traffic may be improved, traffic accidents may be prevented, and the provision of emergency services may be improved by providing a comprehensive and intelligent system for managing traffic and emergency services, which includes a plurality of 3D cameras positioned throughout a city, specifically at traffic intersections, which are capable of determining traffic conditions throughout the city's roads and transmitting it to emergency service providers so that better emergency response routes may be planned, and live video from an emergency scene may be transmitted to the emergency service providers, a plurality of 3D cameras positioned on vehicles driving on the city's roads, which are operative to alert drivers to an imminent accident so that drivers may respond accordingly and avoid the accident, and a plurality of location determination means positioned on or near traffic signals and vehicles, which are used to determine the relative speed and position of vehicles from traffic signals, and inform drivers as to whether or not they should proceed through an intersection given the time until a traffic signal turns red and the position and speed of a vehicle.

### BRIEF DESCRIPTION OF THE DRAWINGS

FIG. 1A shows a system in accordance with a first embodiment;
FIG. 1B shows a sub-system in accordance with the first embodiment;
FIG. 1C shows a another sub-system in accordance with the first embodiment;
FIG. 2A shows a system in accordance with a second embodiment;
FIG. 2B shows a sub-system in accordance with the second embodiment;
FIG. 3A shows a system in accordance with a third embodiment;
FIG. 3B shows a sub-system in accordance with the third embodiment; and
FIG. 4 shows a block diagram depicting an article or apparatus in accordance with other embodiments.

### DETAILED DESCRIPTION OF PREFERRED EMBODIMENTS

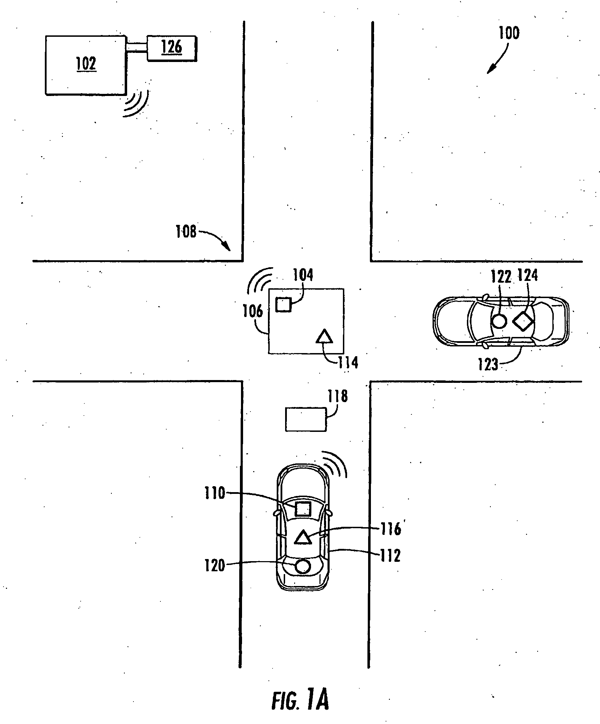

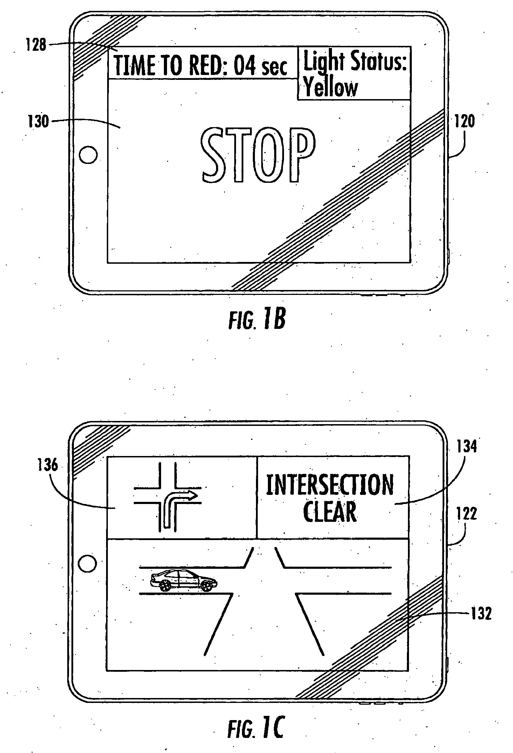

FIGS. 1A through 1C show a comprehensive and intelligent traffic and emergency services management system 100, in accordance with a first embodiment, comprising at least one processor 102, a first location determination means 104 electronically connected to the processor 102, positioned on or near a traffic signal 106 at an intersection 108, and operative to determine the location of the traffic signal 106, a second location determination means 110 electronically connected to the processor 102, positioned on a first vehicle 112, and operative to determine a location and velocity of the first vehicle 112, a first 3D camera 114 electronically connected to the processor 102 and positioned on or near the traffic signal 106, wherein the first 3D camera 114's field of view (not shown) encompasses all or part of the intersection 108, and wherein the first 3D camera 114 is operative to capture an image or video 132 of the intersection 108 and detect the presence of a vehicle (such as vehicle 112) or pedestrian near the intersection 108, a second 3D camera 116 electronically connected to the processor 102, and positioned on the first vehicle 112, wherein the second 3D camera 116 is operative to detect the presence and position of an object 118 in front of the first vehicle 112, a first display means 120 electronically connected to the processor 102, and positioned within the first vehicle 112, wherein the first display means 120 is visible to a driver (not shown) of the first vehicle 112, a second display means 122 electronically connected to the processor 102, and positioned within an emergency services vehicle 123, wherein the second display means 122 is visible to a driver (not shown) of the emergency services vehicle 123, a means 124 to control the first 3D camera 114 electronically connected to the processor 102, wherein the means 124 to control the first 3D camera is positioned within the emergency services vehicle 123, computer executable instructions 126 readable by the processor 102 and operative to use the first location determination means 104 and the second location determination means 110 to determine how long it will take the first vehicle 112 to reach the intersection 108, display a count-down 128 until the traffic signal 106 shows a red light, wherein the count-down 128 is displayed on the first display means 120, determine whether the first vehicle 112 will pass through the intersection 108 before the traffic signal 106 shows a red light based on the locations of the first vehicle 112 and the traffic signal 106 and the first vehicle 112's velocity, use the first display means 120 to alert the driver of the first vehicle 112 to stop at the intersection 108 if it is determined that the first 112 vehicle will not pass through the intersection 108 before the traffic signal 106 shows a red light, or to pass through the intersection 108 if it is determined that the first vehicle 112 will pass through the intersection 108 before the traffic signal 106 shows a red light, use the second 3D camera 116 to determine whether the first vehicle 112 will collide with the object 118 in front of the first vehicle 112 based on the position and velocity of the first vehicle 112 and the position and velocity of the obj ect 118 in front of the first vehicle 112, use the first display means 120 to alert 130 the driver of the first vehicle 112 to stop if it is determined that the first vehicle 112 will collide with the object 118 in front of the first vehicle 112, use the second display 122 means to display the video or image 132 captured by the first 3D camera 114, allow a driver or passenger (not shown) of the emergency services vehicle 123 to use the means 124 to control the first 3D camera 114 to control the first 3D camera 114, use the first 3D camera 114 to determine a traffic condition at the intersection 108, and display the determination 134 on the second display means 122, based on the traffic condition at the intersection 108 determine a best route 136 for the emergency services vehicle 123 to take to an emergency (not shown), and use the second display means 122 to display the best route 136.

In some embodiments, at least one processor 102 may be any type of processor, including, but not limited to, a single core processor, a multi-core processor, a computer processor, a server processor, and the like. In another embodiment, at least one processor 102 may be a part of a traffic management system, which includes a network of computers to execute the various operations of computer executable instructions 126, wherein the various computers of the network may comprise various processors 102. In other embodiments, at least one processor 102 may comprise a plurality of processors that are part of the various components of system 100, including the first and second 3D cameras 114, 116, the first and second location determinations means 104, 110, the first and second display means, 120, 122, the traffic signal 106, the means 124 to control the first 3D camera 114, and the like (collectively called "system components"), wherein said processors may be interconnection through various wired or wireless electronic connections to enable electronic communication between the various system components.

The terms "connected," "electronically connected," "communication," "communicate," "electronic communication," and the like, when used in the context of electronic systems and components, may refer to any type of electronic connection or communication, such as a wired electronic connection or communication, such as those enabled by wires or an electronic circuit board, a wireless electronic connection or communication, such as those enabled by wireless networks or wireless communications modules, such as Wi-Fi, Bluetooth™, Zigbee™, and the like, or a combination thereof.

In some embodiments, system 100 may comprise of a plurality of processors 102, first location determination means 104, second location determination means 110, first 3D cameras 114, second 3D cameras 116, first display means 120, second display means 122, means 124 to control first 3D cameras 114, and computer executable instructions 126 positioned throughout a plurality of vehicles (which may be similar to first vehicle 112), emergency service vehicles (which may be similar to emergency service vehicle 123), traffic signals (which may be similar to traffic signal 106), and intersections (which may be similar to intersection 108 in a city (not shown). This may allow for a vast, city-wide system comprising of network of interconnected 3D cameras, location determination means, and other system components positioned throughout the city's intersections, within vehicles traveling in the city, and within emergency service vehicles traveling in the city, wherein the city-wide system may be operative to improve traffic conditions, avoid collisions between vehicles, provide best-route alternative to emergency service vehicles, and allow emergency service providers to determine conditions at intersections or scenes of an accident so that they may respond in a more effective manner.

In some embodiments, first and second location determination means 104, 110 may each comprise a global positioning system ("GPS") receiver, a GPS module, and the like, which may be operative to receive location determination signals from GPS satellites or antennae to determine a location of means 104, 110, or whatever they are physically connected to, such as first vehicle 112 or traffic signal 106.

The various system components may be powered by any means, such as a traditional wired power means, which includes being connected to a city-wide power grid. In alternate embodiments, the various system components may be solar powered.

In some embodiments, the first and second 3D cameras 114, 116 may each comprise a structured light camera. The term "3D camera," as used herein, may refer to any type of camera or sensor that is capable of capture three dimensional images or video, such as a time-of-flight sensor, a obstructed light sensor, a structured light sensor, or any other type of 3D sensor, such as those developed and/or produced by companies such as Canesta Cameras (U.S.), Primesense (Israel), Microsoft (U.S.), PMD Technologies (Germany), Optrima (Belgium), and the like.

In one embodiment, the computer executable instructions 126 may include object recognition software and/or firmware, which may be used to identify objects, such as vehicles or pedestrians. Such object recognition software may include image recognition software, which may, in turn, include facial recognition software, or may simply include general visual object recognition software. In yet a further embodiment, the object recognition software may use a plurality of 3D cameras to determine to identify objects.

The terms "object recognition software," and "image recognition software," as used throughout the present disclosure, may refer to the various embodiments of object recognition software known in the art, including, but not limited to, those embodiments described in the following publications: Reliable Face Recognition Methods: System Design, Implementation, and Evaluation, by Harry Wechsler, Copyright 2007, Published by Springer, ISBN-13: 978-0-387-22372-8; Biometric Technologies and Verification Systems, by John Vacca, Copyright 2007, Elsevier, Inc., Published by Butterworth-Heinemann, ISBN-13: 978-0-7506-7967-1; and Image Analysis and Recognition, edited by Aurelio Campilho and Mohamed Kamel, Copyright 2008, Published by Springer, ISBN-13: 978-3-540-69811-1, Eye Tracking Methodology: Theory and Practice, by Andrew T. Duchowski, Copyright 2007, Published by Springer, ISBN 978-1-84628-608-7. In one embodiment, the object recognition software may comprise object or gesture recognition and/or control software, such as those various embodiments produced and developed by Softkinetic S.A., 24 Avenue L. Mommaerts, Brussels, B-1140, Belgium; Microsoft Corp., One Microsoft Way, Redmond, WA, USA; and Omek Interactive, 2 Hahar Street, Industrial Zone Har Tuv A , Ganir Center Beith Shemesh 99067, Israel. The computer executable instructions 126, including the object recognition software, may be programmed to identify the shapes of people and vehicles.

In some embodiments, computer executable instructions 126 may comprise computer language or other means for embodying computer executable instructions, such as C, C++, C#, Java, Flash, HTML, HTML 5, and the like. Computer executable instructions 126 may be stored on any digital storage means, such as a computer readable medium, which may include a hard drive, flash storage, a CD-ROM, a DVD, and the like. Computer executable instructions 126 may be accessed by processor 102 via a local connection, such as by being directly connected to a computer readable medium in which computer executable instructions 126 are stored, or via a remote connection, such as via a computer network connection.

In some embodiments, system 100 may further comprise a plurality of wireless communications means, wherein the processor 102, the first and second location determination means 104, 110, the first and second 3D cameras 114, 116, and the first and second display means 120, 122, and the means 124 for controlling the first 3D camera 114 are each connected to one of the plurality of wireless communications means, and wherein the wireless communications means are operative to facilitate electronic inter-communication between the processor 102, the first and second location determination means 104, 110, the first and second 3D cameras 114, 116, and the first and second display means 120, 122, and the means 124 for controlling the first 3D camera.

In some embodiments, the wireless communications means may comprise a wireless communications module, such as, but not limited to, a wireless communications transceiver, such as, but not limited to, a Wi-Fi, GSM, Bluetooth™, or Zigbee™ transceiver.

Display means 120, 122 may comprise any type of display means, such as, but not limited to, a LCD screen, a LED screen, and the like.

In other embodiments, means 124 for controlling first 3D camera 114 comprises any type of electronic means for receiving user input, such as a joystick, a keypad, a touch screen, and the like. Means 124 may be operative to remotely control first 3D camera 114, such as through a wireless communications means or network. In some embodiments, allowing a driver or passenger of the emergency services vehicle 123 comprises allowing a driver or passenger of emergency services vehicle 123 to use means 124 to zoom the first 3D camera 114 (either digitally or mechanically via lenses), change the position of the first 3D camera 114 (such as by moving along a track or suspended cables), or change the direction in which the first 3D camera 114 is pointing (such as by turning, panning, rotating, or pivoting a camera).

In some embodiments, determining the location, speed or velocity of a vehicle or intersection comprises using the location determination means to calculate a location at one point in time, compare it to the location at another point in time, and determine the speed and direction therefrom. Any of the calculations known in the art for using a location determination means to determine location, speed, and direction of travel may be used.

In some embodiments, using a 3D camera comprises using object recognition software to analyze an image or video captured by the 3D camera and determine whether any objects captured by the 3D camera correspond to pre-programmed objects, such as vehicles, pedestrians, and the like. Any method known in the art for using object recognition software to analyze imagery or video may be used.

In some embodiments, using first 3D camera 114 to determine whether an accident has occurred at intersection 108 or to determine a traffic condition at intersection 108 comprises using object recognition software to analyze an image or video 132 captured by 3D camera 114 and determine whether any vehicles are irregularly positioned in intersection 108, such as not along designated paths of travel, or facing awkward directions, or whether a collision between two objects, such as two vehicles, or a vehicle and a pedestrian has occurred.

In other embodiments, using first 3D camera 114 to determine a traffic condition at intersection 108 comprises using object recognition software to analyze an image or video 132 captured by first 3D camera 114 and determine the speed and number of vehicles passing through the intersection 108. Accordingly, for example, a low number of vehicles passing at a low speed may lead to a determination that a congested traffic condition exists, while a high number of vehicles passing at a high speed may indicate a non-congested traffic condition exists. The term "traffic condition" may be used to describe any type of traffic condition, including whether any accidents have occurred, traffic congestion, and the like. Any systems and methods known in the art for using 3D camera and object recognition software for identifying and counting objects, such as vehicles, and their speed, may be employed, such as the various embodiments of object recognition software disclosed above.

In some embodiments, determining a best route 136 may comprise of analyzing data collected from a plurality of 3D sensors present at a plurality of intersections to determine traffic conditions at various intersections, and calculating the best route based on the distance of the route and the traffic conditions along the route, wherein the best route may comprise the route that will take the emergency services vehicle the shortest amount of time to complete, wherein the time is calculated based on traffic conditions and distance. Many algorithms for calculating best routes are known in the art, including those employed by Google™ Maps, Garmin™ GPS devices, Tom Tom™ GPS devices, and the like.

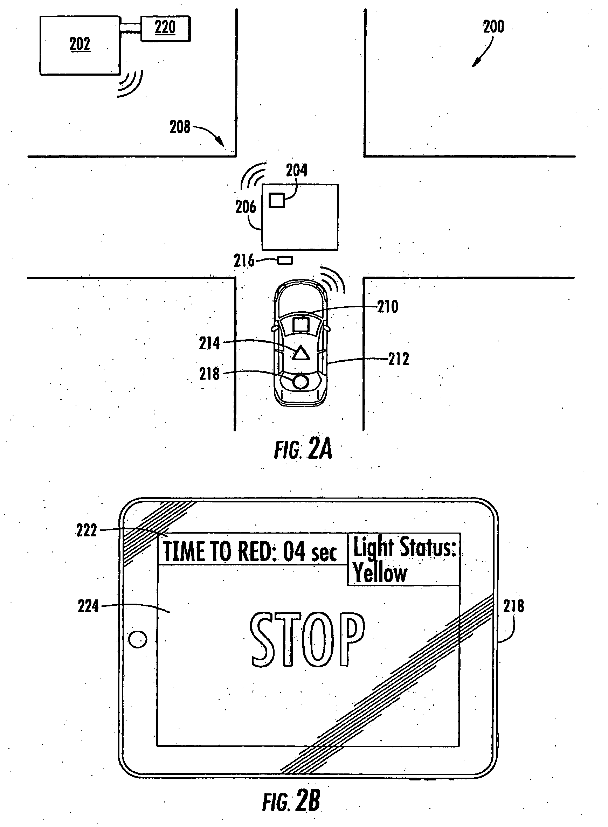

Referring now to FIGS. 2A and 2B, a comprehensive and intelligent traffic and emergency services management system 200 is shown in accordance with a second embodiment, comprising at least one processor 202, a first location determination means 204 electronically connected to the processor 202, positioned on or near a traffic signal 206 at an intersection 208, and operative to determine the location of the traffic signal 206, a second location determination means 210 electronically connected to the processor 202, positioned on a vehicle 212, and operative to determine a location and velocity of the vehicle 212, a 3D camera 214 electronically connected to the processor 102, and positioned on first vehicle 212, wherein the 3D camera 214 is operative to detect the presence and position of an object 216 in front of the vehicle 212, a display means 218 electronically connected to the processor 202, and positioned within the vehicle 212, wherein the display means is visible to a driver of the vehicle 212, and computer executable instructions 220 readable by the processor 202 and operative to use the first location determination means 204 and the second location determination means 210 to determine how long it will take the vehicle 212 to reach the intersection 208, display a count-down 222 until the traffic signal 206 shows a red light, wherein the count-down 222 is displayed on the display means 218, determine whether the vehicle 212 will pass through the intersection 208 before the traffic signal 206 shows a red light based on the locations of the vehicle 212 and the traffic signal 206 and the vehicle 212's velocity, use the display means 218 to alert 224 the driver of the vehicle 212 to stop at the intersection 208 if it is determined that the vehicle 212 will not pass through the intersection 208 before the traffic signal 206 shows a red light, or to pass through the intersection 208 if it is determined that the vehicle 212 will pass through the intersection 208 before the traffic signal 206 shows a red light, use the 3D camera 214 to determine whether the vehicle 212 will collide with the object 216 in front of the vehicle 212 based on the position and velocity of the vehicle 212 and the position and velocity of the object 216 in front of the vehicle 212 and use the display means 218 to alert the driver of the vehicle 212 to stop if it is determined that the vehicle 212 will collide with the object 216 in front of the vehicle 212.

In some embodiments, at least one processor 202 may be any type of processor, including, but not limited to, a single core processor, a multi-core processor, a computer processor, a server processor, and the like. In another embodiment, at least one processor 202 may be a part of a traffic management system, which includes a network of computers to execute the various operations of computer executable instructions 220, wherein the various computers of the network may comprise various processors 202. In other embodiments, at least one processor 202 may comprise a plurality of processors that are part of the various components of system 200, including the 3D camera 214 the first and second location determinations means 204, 210, the display means 218 the traffic signal 206, and the like (collectively called "system components"), wherein said processors may be interconnection through various wired or wireless electronic connections to enable electronic communication between the various system components.

The terms "connected," "electronically connected," "communication," "communicate," "electronic communication," and the like, when used in the context of electronic systems and components, may refer to any type of electronic connection or communication, such as a wired electronic connection or communication, such as those enabled by wires or an electronic circuit board, a wireless electronic connection or communication, such as those enabled by wireless networks or wireless communications modules, such as Wi-Fi, Bluetooth™, Zigbee™, and the like, or a combination thereof.

In some embodiments, system 200 may comprise of a plurality of processors 202, first location determination means 204, second location determination means 210, 3D cameras 214, display means 218, and computer executable instructions 220 positioned throughout a plurality of vehicles (which may be similar to first vehicle 212), traffic signals (which may be similar to traffic signal 206), and intersections (which may be similar to intersection 208 in a city (not shown)). This may allow for a vast, city-wide system comprising of network of interconnected 3D cameras, location determination means, and other system components positioned throughout the city's intersections, within vehicles traveling in the city, wherein the city-wide system may be operative to improve traffic conditions, avoid collisions between vehicles.

In some embodiments, first and second location determination means 204, 210 may each comprise a global positioning system ("GPS") receiver, a GPS module, and the like, which may be operative to receive location determination signals from GPS satellites or antennae to determine a location of means 204, 210, or whatever they are physically connected to, such as first vehicle 212 or traffic signal 206.

The various system components may be powered by any means, such as a traditional wired power means, which includes being connected to a city-wide power grid. In alternate embodiments, the various system components may be solar powered.

In some embodiments, the 3D camera 214 may comprise a structured light camera. The term "3D camera," as used herein, may refer to any type of camera or sensor that is capable of capture three dimensional images or video, such as a time-of-flight sensor, a obstructed light sensor, a structured light sensor, or any other type of 3D sensor, such as those developed and/or produced by companies such as Canesta Cameras (U.S.), Primesense (Israel), Microsoft (U.S.), PMD Technologies (Germany), Optrima (Belgium), and the like.

In one embodiment, the computer executable instructions 220 may include object recognition software and/or firmware, which may be used to identify objects, such as vehicles or pedestrians. Such object recognition software may include image recognition software, which may, in turn, include facial recognition software, or may simply include general visual object recognition software. In yet a further embodiment, the object recognition software may use a plurality of 3D cameras to determine to identify objects.

The terms "object recognition software," and "image recognition software," as used throughout the present disclosure, may refer to the various embodiments of object recognition software known in the art, including, but not limited to, those embodiments described in the following publications: Reliable Face Recognition Methods: System Design, Implementation, and Evaluation, by Harry Wechsler, Copyright 2007, Published by Springer, ISBN-13: 978-0-387-22372-8; Biometric Technologies and Verification Systems, by John Vacca, Copyright 2007, Elsevier, Inc., Published by Butterworth-Heinemann, ISBN-13: 978-0-7506-7967-1; and Image Analysis and Recognition, edited by Aurelio Campilho and Mohamed Kamel, Copyright 2008, Published by Springer, ISBN-13: 978-3-540-69811-1, Eye Tracking Methodology: Theory and Practice, by Andrew T. Duchowski, Copyright 2007, Published by Springer, ISBN 978-1-84628-608-7. In one embodiment, the object recognition software may comprise object or gesture recognition and/or control software, such as those various embodiments produced and developed by Softkinetic S.A., 24 Avenue L. Mommaerts, Brussels, B-1140, Belgium; Microsoft Corp., One Microsoft Way, Redmond, WA, USA; and Omek Interactive, 2 Hahar Street, Industrial Zone Har Tuv A , Ganir Center Beith Shemesh 99067, Israel. The computer executable instructions 126, including the object recognition software, may be programmed to identify the shapes of people and vehicles.

In some embodiments, computer executable instructions 220 may comprise computer language or other means for embodying computer executable instructions, such as C, C++, C#, Java, Flash, HTML, HTML 5, and the like. Computer executable instructions 220 may be stored on any digital storage means, such as a computer readable medium, which may include a hard drive, flash storage, a CD-ROM, a DVD, and the like. Computer executable instructions 220 may be accessed by processor 220 via a local connection, such as by being directly connected to a computer readable medium in which computer executable instructions 220 are stored, or via a remote connection, such as via a computer network connection.

In some embodiments, system 200 may further comprise a plurality of wireless communications means, wherein the processor 202, the first and second location determination means 204, 210, the 3D camera 214, and the display means 218 are each connected to one of the plurality of wireless communications means, and wherein the wireless communications means are operative to facilitate electronic inter-communication between the processor 202, the first and second location determination means 204, 210, 3D camera 214, and display means 218 are each connected to one of the plurality of wireless communications means.

In some embodiments, the wireless communications means may comprise a wireless communications module, such as, but not limited to, a wireless communications transceiver, such as, but not limited to, a Wi-Fi, GSM, Bluetooth™, or Zigbee™ transceiver.

Display means 218 may comprise any type of display means, such as, but not limited to, a LCD screen, a LED screen, and the like.

In some embodiments, determining the location, speed or velocity of a vehicle or intersection comprises using the location determination means to calculate a location at one point in time, compare it to the location at another point in time, and determine the speed and direction therefrom. Any of the calculations known in the art for using a location determination means to determine location, speed, and direction of travel may be used.

In some embodiments, using a 3D camera comprises using object recognition software to analyze an image or video captured by the 3D camera and determine whether any objects captured by the 3D camera correspond to pre-programmed objects, such as vehicles, pedestrians, and the like. Any method known in the art for using object recognition software to analyze imagery or video may be used.

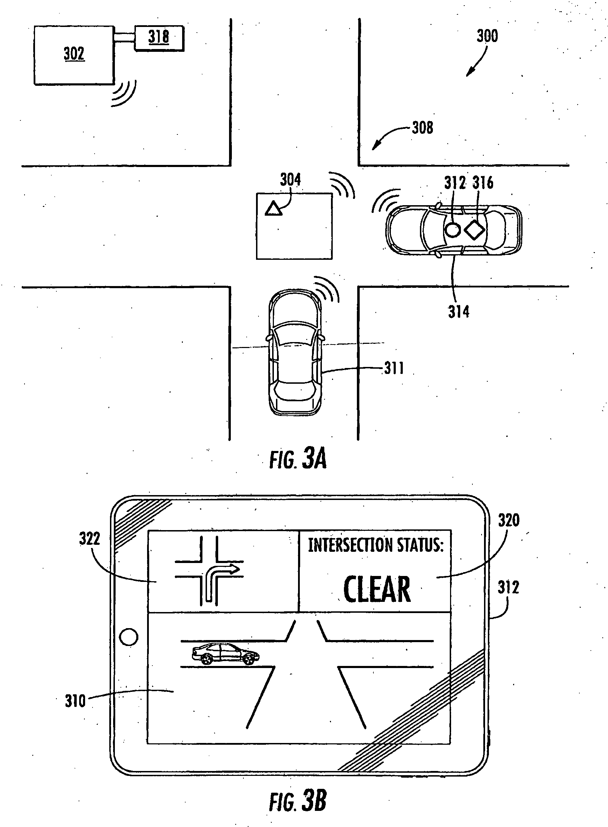

Referring now to FIGS. 3A and 3B, a comprehensive and intelligent traffic and emergency services management system 300 is shown, in accordance with a third embodiment, comprising at least one processor 302, a 3D camera 304 electronically connected to the processor 302 and positioned on or near the traffic signal 306, wherein the 3D camera's field of view encompasses a part of or an entire intersection 308 associated with traffic signal 306, and wherein the 3D camera 304 is operative to capture an image or video 310 of the intersection 308 and detect the presence of a vehicle or pedestrian 311 near the intersection 308, a display means 312 electronically connected to the processor 302, and positioned within an emergency services vehicle 314, wherein the display means is visible to a driver (not shown) of the emergency services vehicle 314, a means 316 to control the 3D camera 304 electronically connected to the processor 302, wherein the means 316 to control the 3D camera 304 is positioned within the emergency services vehicle 314, and computer executable instructions readable by the processor 302 and operative to use the display means 312 to display the video or image 310 captured by the first 3D camera 304, allow a driver or passenger of the emergency services vehicle 314 to use the means 316 to control the 3D camera 314 to control the 3D camera 314, use the 3D camera 314 to determine whether an accident has occurred at the intersection 308, and display the determination 320 on the display means 312, and use the 3D camera 314 to determine a traffic condition at the intersection 308, based on the traffic condition at the intersection 308 determine a best route 322 for the emergency services vehicle 314 to take to an emergency, and use the display means 312 to.display the best route 322.

In some embodiments, at least one processor 302 may be any type of processor, including, but not limited to, a single core processor, a multi-core processor, a computer processor, a server processor, and the like. In another embodiment, at least one processor 302 may be a part of a traffic management system, which includes a network of computers to execute the various operations of computer executable instructions 318, wherein the various computers of the network may comprise various processors 302. In other embodiments, at least one processor 302 may comprise a plurality of processors that are part of the various components of system 300, including the 3D cameras 304, the display means 312, the traffic signal 306, the means 316 to control the 3D camera 304, and the like (collectively called "system components"), wherein said processors may be interconnection through various wired or wireless electronic connections to enable electronic communication between the various system components.

The terms "connected," "electronically connected," "communication," "communicate," "electronic communication," and the like, when used in the context of electronic systems and components, may refer to any type of electronic connection or communication, such as a wired electronic connection or communication, such as those enabled by wires or an electronic circuit board, a wireless electronic connection or communication, such as those enabled by wireless networks or wireless communications modules, such as Wi-Fi, Bluetooth™, Zigbee™, and the like, or a combination thereof.

In some embodiments, system 300 may comprise of a plurality of processors 302, 3D cameras 304, display means 312, means 316 to control 3D cameras 304, and computer executable instructions 318 positioned throughout a plurality of emergency service vehicles (which may be similar to emergency service vehicle 314), traffic signals (which may be similar to traffic signal 306), and intersections (which may be similar to intersection 308 in a city (not shown). This may allow for a vast, city-wide system comprising of network of interconnected 3D cameras, and other system components positioned throughout the city's intersections, within vehicles traveling in the city, and within emergency service vehicles traveling in the city, wherein the city-wide system may be operative to improve traffic conditions, avoid collisions between vehicles, provide best-route alternative to emergency service vehicles, and allow emergency service providers to determine conditions at intersections or scenes of an accident so that they may respond in a more effective manner.

The various system components may be powered by any means, such as a traditional wired power means, which includes being connected to a city-wide power grid: In alternate embodiments, the various system components may be solar powered.

In some embodiments, the 3D cameras 304 may comprise a structured light camera. The term "3D camera," as used herein, may refer to any type of camera or sensor that is capable of capture three dimensional images or video, such as a time-of-flight sensor, a obstructed light sensor, a structured light sensor, or any other type of 3D sensor, such as those developed and/or produced by companies such as Canesta Cameras (U.S.), Primesense (Israel), Microsoft (U.S.), PMD Technologies (Germany), Optrima (Belgium), and the like.

In one embodiment, the computer executable instructions 318 may include object recognition software and/or firmware, which may be used to identify objects, such as vehicles or pedestrians. Such object recognition software may include image recognition software, which may, in turn, include facial recognition software, or may simply include general visual object recognition software. In yet a further embodiment, the object recognition software may use a plurality of 3D cameras to determine to identify objects.

The terms "object recognition software," and "image recognition software," as used throughout the present disclosure, may refer to the various embodiments of object recognition software known in the art, including, but not limited to, those embodiments described in the following publications: Reliable Face Recognition Methods: System Design, Implementation, and Evaluation, by Harry Wechsler, Copyright 2007, Published by Springer, ISBN-13: 978-0-387-22372-8; Biometric Technologies and Verification Systems, by John Vacca, Copyright 2007, Elsevier, Inc., Published by Butterworth-Heinemann, ISBN-13: 978-0-7506-7967-1; and Image Analysis and Recognition, edited by Aurelio Campilho and Mohamed Kamel, Copyright 2008, Published by Springer, ISBN-13: 978-3-540-69811-1, Eye Tracking Methodology: Theory and Practice, by Andrew T. Duchowski, Copyright 2007, Published by Springer, ISBN 978-1-84628-608-7. In one embodiment, the object recognition software may comprise object or gesture recognition and/or control software, such as those various embodiments produced and developed by Softkinetic S.A., 24 Avenue L. Mommaerts, Brussels, B-1140, Belgium; Microsoft Corp., One Microsoft Way, Redmond, WA, USA; and Omek Interactive, 2 Hahar Street, Industrial Zone Har Tuv A , Ganir Center Beith Shemesh 99067, Israel. The computer executable instructions 126, including the object recognition software, may be programmed to identify the shapes of people and vehicles.

In some embodiments, computer executable instructions 318 may comprise computer language or other means for embodying computer executable instructions, such as C, C++, C#, Java, Flash, HTML, HTML 5, and the like. Computer executable instructions 318 may be stored on any digital storage means, such as a computer readable medium, which may include a hard drive, flash storage, a CD-ROM, a DVD, and the like. Computer executable instructions 318 may be accessed by processor 302 via a local connection, such as by being directly connected to a computer readable medium in which computer executable instructions 318 are stored, or via a remote connection, such as via a computer network connection.

In some embodiments, system 300 may further comprise a plurality of wireless communications means, wherein the processor 302, 3D camera 304, and the display means 312, and the means 316 for controlling the 3D camera 304 are each connected to one of the plurality of wireless communications means, and wherein the wireless communications means are operative to facilitate electronic inter-communication between the processor 302, the 3D camera 304, the display means 312, and the means 316 for controlling the 3D camera 304.

In some embodiments, the wireless communications means may comprise a wireless communications module, such as, but not limited to, a wireless communications transceiver, such as, but not limited to, a Wi-Fi, GSM, Bluetooth™, or Zigbee™ transceiver.

Display means 312 may comprise any type of display means, such as, but not limited to, a LCD screen, a LED screen, and the like.

In other embodiments, means 316 for controlling 3D camera 304 comprises any type of electronic means for receiving user input, such as a joystick, a keypad, a touch screen, and the like. Means 316 may be operative to remotely control 3D camera 304, such as through a wireless communications means or network. In some embodiments, allowing a driver or passenger of the emergency services vehicle 314 comprises allowing a driver or passenger of emergency services vehicle 314 to use means 316 to zoom the 3D camera 304 (either digitally or mechanically via lenses), change the position of the 3D camera 304 (such as by moving along a track or suspended cables), or change the direction in which the 3D camera 304 is pointing (such as by turning, panning, rotating, or pivoting a camera).

In some embodiments, using a 3D camera comprises using object recognition software to analyze an image or video captured by the 3D camera and determine whether any objects captured by the 3D camera correspond to pre-programmed objects, such as vehicles, pedestrians, and the like. Any method known in the art for using object recognition software to analyze imagery or video may be used.

In some embodiments, using 3D camera 304 to determine whether an accident has occurred at intersection 308 or to determine a traffic condition at intersection 308 comprises using object recognition software to analyze an image or video 310 captured by 3D camera 304 and determine whether any vehicles are irregularly positioned in intersection 308, such as not along designated paths of travel, or facing awkward directions, or whether a collision between two objects, such as two vehicles, or a vehicle and a pedestrian has occurred.

In other embodiments, using 3D camera 304 to determine a traffic condition at intersection 308 comprises using object recognition software to analyze an image or video 310 captured by 3D camera 304 and determine the sped and number of vehicles passing through the intersection 308. Accordingly, for example, a low number of vehicles passing at a low speed may lead to a determination that a congested traffic condition exists, while a high number of vehicles passing at a high speed may indicate a non-congested traffic condition exists. The term "traffic condition" may be used to describe any type of traffic condition, including whether any accidents have occurred, traffic congestion, and the like. Any systems and methods known in the art for using 3D camera and object recognition software for identifying and counting objects, such as vehicles, and their speed, may be employed, such as the various embodiments of object recognition software disclosed above.

In some embodiments, determining a best route 322 may comprise of analyzing data collected from a plurality of 3D sensors present at a plurality of intersections to determine traffic conditions at various intersections, and calculating the best route based on the distance of the route and the traffic conditions along the route, wherein the best route may comprise the route that will take the emergency services vehicle the shortest amount of time to complete, wherein the time is calculated based on traffic conditions and distance. Many algorithms for calculating best routes are known in the art, including those employed by Google™ Maps, Garmin™ GPS devices, Tom Tom™ GPS devices, and the like.

### Hardware and Operating Environment

This section provides an overview of example hardware and the operating environments in conjunction with which embodiments of the inventive subject matter can be implemented.

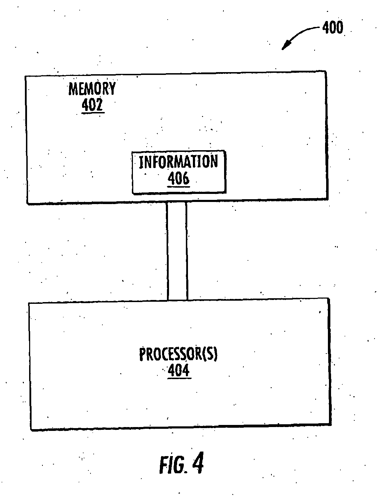

A software program may be launched from a computer readable medium in a computer-based system to execute the functions defined in the software program. Various programming languages may be employed to create software programs designed to implement the systems 100, 200, and 300 disclosed herein. The programs may be structured in an object-orientated format using an object-oriented language such as Java or C++. Alternatively the programs may be structured in a procedure-oriented format using a procedural language, such as assembly or C. The software components may communicate using a number of mechanisms, such as application program interfaces, or inter-process communication techniques, including remote procedure calls. The teachings of various embodiments are not limited to any particular programming language or environment. Thus, other embodiments may be realized, as discussed regarding Fig. 4 below.

FIG. 4 is a block diagram representing an apparatus 400 according to various embodiments. Such embodiments may comprise a computer, a memory system, a magnetic or optical disk, some other storage device, or any type of electronic device or system. The apparatus 400 may include one or more processor(s) 404 coupled to a machine-accessible medium such as a memory 402 (e.g., a memory including electrical, optical, or electromagnetic elements). The medium may contain associated information 406 (e.g., computer program instructions, data, or both) which, when accessed, results in a machine (e.g., the processor(s) 404) performing the activities previously described herein.

The principles of the present disclosure may be applied to all types of computers, systems, and the like, include desktop computers, servers, notebook computers, personal digital assistants, microcomputers, and the like. However, the present disclosure may not be limited to the personal computer.

While the principles of the disclosure have been described herein, it is to be understood by those skilled in the art that this description is made only by way of example and not as a limitation as to the scope of the disclosure. Other embodiments are contemplated within the scope of the present disclosure in addition to the exemplary embodiments shown and described herein. Modifications and substitutions by one of ordinary skill in the art are considered to be within the scope of the present disclosure, as defined by the claims.

## Claims

1. A comprehensive and intelligent traffic and emergency services management system (100,200,300) comprising:
a. at least one processor (102,202,302);
b. a first location determination means (201,204) electronically connected to the processor, positioned on or near a traffic signal (106,206,306) at an intersection (108,208,308), and operative to determine the location of the traffic signal;
c. a second location determination means (110,210) electronically connected to the processor, positioned on a first vehicle (112,212), and operative to determine a location and velocity of the first vehicle;
d. a first 3D camera (114,304) electronically connected to the processor and positioned on or near the traffic signal, wherein the first 3D camera's field of view encompasses all or part of the intersection, and wherein the first 3D camera is operative to capture an image or video (132,310) of the intersection and detect the presence of a vehicle or pedestrian (311) near the intersection;
e. a second 3D camera (116,214) electronically connected to the processor, and positioned on the first vehicle, wherein the second 3D camera is operative to detect the presence, velocity, and position of an object (118,216) in front of the first vehicle;
f. a first display means (120,218) electronically connected to the processor, and positioned within the first vehicle, wherein the first display means is visible to a driver of the first vehicle;
g. a second display means (122,312) electronically connected to the processor, and positioned within an emergency services vehicle (123,314), wherein the second display means is visible to a driver of the emergency services vehicle;
h. a means (124,316) to control the first 3D camera electronically connected to the processor, wherein the means to control the first 3D camera is positioned within the emergency services vehicle; and
i. computer executable instructions (126,220) readable by the processor and operative to:
i. use the first location determination means and the second location determination means to determine how long it will take the first vehicle to reach the intersection;
ii. display a count-down (128,222) until the traffic signal shows a red light, wherein the count-down.is displayed on the first display means;
iii. determine whether the first vehicle will pass through the intersection before the traffic signal shows a red light based on the locations of the first vehicle and the traffic signal and the first vehicle's velocity;
iv. use the first display means to alert the driver of the first vehicle to stop at the intersection if it is determined that the first vehicle will not pass through the intersection before the traffic signal shows a red light, or to pass through the intersection if it is determined that the first vehicle will pass through the intersection before the traffic signal shows a red light;
v. use the second 3D camera to determine whether the first vehicle will collide with the object in front of the first vehicle based on the position and velocity of the first vehicle and the position and velocity of the object in front of the first vehicle;
vi. use the first display means to alert (130,224) the driver of the first vehicle to stop if it is determined that the first vehicle will collide with the object in front of the first vehicle;
vii. use the second display means to display the video or image (132,310) captured by the first 3D camera;
viii. allow a driver or passenger of the emergency services vehicle to use the means to control the first 3D camera to control the first 3D camera;
ix. use the first 3D camera to determine a traffic condition at the intersection, and display the determination (134,320) on the second display means;
x. based on the traffic condition at the intersection determine a best route (136,322) for the emergency services vehicle to take to an emergency; and
xi. use the second display means to display the best route.

2. The system of claim 1, wherein the system comprises a plurality of processors, first location determination means, second location determination means, first 3D cameras, second 3D cameras, first display means, second display means, means to control the first 3D cameras, and computer executable instructions positioned throughout a plurality of vehicles, emergency services vehicles, and intersections in a city.

3. The system of claim 1, wherein the first location determination means and the second location determination means each comprise global positioning system receiver.

4. The system of claim 1, wherein the first 3D camera and the second 3D camera each comprise a structured light camera.

5. The system of claim 1, wherein the computer executable instructions comprise object recognition software.

6. The system of claim 1, further comprising a plurality of wireless communications means, wherein the processor, the first and second location determination means, the first and second 3D cameras, and the first and second display means, and the means for controlling the first 3D camera are each connected to one of the plurality of wireless communications means, and wherein the wireless communications means are operative to facilitate electronic inter-communication between the processor, the first and second location determination means, the first and second 3D cameras, and the first and second display means, and the means for controlling the first 3D camera.

7. The system of claim 1 wherein the intersection is associated with a traffic signal and the traffic condition is associated with an accident that has occured at the intersection.

8. The system of claim 7, wherein the system comprises a plurality of processors, 3D cameras, display means, and computer executable instructions positioned throughout a plurality of emergency services vehicles and intersections in a city.

9. The system of claim 7, wherein the first 3D camera comprises a structured light camera.

10. The system of claim 7, wherein the computer executable instructions comprise object recognition software.

11. The system of claim 7, further comprising a plurality of wireless communications means, wherein the processor, the first 3D camera, and the second display means are each connected to one of the plurality of wireless communications means, and wherein the wireless communications means are operative to facilitate electronic inter-communication between the first 3D camera, the processor and the second display means.

12. The system of claim 7, wherein allowing a driver or passenger of the emergency services vehicle to use the means to control the first 3D camera to control the first 3D camera comprises allowing a driver or passenger of the emergency services vehicle to use the means to control the first 3D camera to zoom the 3D camera, change the position of the first 3D camera, or chance the direction in which the first 3D camera is pointing.

13. The system of claim 7, wherein using the first 3D camera to determine whether an accident has occurred at the intersection comprises using object recognition software to analyze an image or video captured by the first 3D camera and determine whether any vehicles are irregularly positioned in the intersection.

14. The system of claim 7, wherein using the first 3D camera to determine a traffic condition at the intersection comprises using object recognition software to analyze an image or video captured by the first 3D camera and determine the speed and number of vehicles passing through the intersection.

## Patentansprüche

1. Umfassendes und intelligentes Verkehrs- und Notdienstmanagementsystem (100, 200, 300), das Folgendes umfasst:
a. wenigstens einen Prozessor (102, 202, 302);
b. ein erstes Ortsbestimmungsmittel (104, 204), das elektronisch mit dem Prozessor verbunden und an oder nahe einem Verkehrssignal (106, 206, 306) an einer Kreuzung (108, 208, 308) positioniert ist und die Aufgabe hat, den Ort des Verkehrssignals zu bestimmen;
c. ein zweites Ortsbestimmungsmittel (110, 210), das elektronisch mit dem Prozessor verbunden, an einem ersten Fahrzeug (112, 212) positioniert ist und die Aufgabe hat, Ort und Geschwindigkeit des ersten Fahrzeugs zu bestimmen;
d. eine erste 3D-Kamera (114, 304), die elektronisch mit dem Prozessor verbunden und an oder nahe dem Verkehrssignal positioniert ist, wobei das Sichtfeld der ersten 3D-Kamera die Kreuzung ganz oder teilweise umfasst und wobei die erste 3D-Kamera die Aufgabe hat, ein Bild oder Video (132, 310) der Kreuzung zu erfassen und die Anwesenheit eines Fahrzeugs oder Fußgängers (311) in der Nähe der Kreuzung zu erkennen;
e. eine zweite 3D-Kamera (116, 214), die elektronisch mit dem Prozessor verbunden und an dem ersten Fahrzeug positioniert ist, wobei die zweite 3D-Kamera die Aufgabe hat, Anwesenheit, Geschwindigkeit und Position eines Objekts (118, 216) vor dem ersten Fahrzeug zu erkennen;
f. ein erstes Anzeigemittel (120, 218), das elektronisch mit dem Prozessor verbunden und in dem ersten Fahrzeug positioniert ist, wobei das erste Anzeigemittel für einen Fahrer des ersten Fahrzeugs sichtbar ist;
g. ein zweites Anzeigemittel (122, 312), das elektronisch mit dem Prozessor verbunden und in einem Notdienstfahrzeug (123, 314) positioniert ist, wobei das zweite Anzeigemittel für den Fahrer eines Notdienstfahrzeugs sichtbar ist;
h. ein Mittel (124, 316) zum Steuern der ersten 3D-Kamera, das elektronisch mit dem Prozessor verbunden ist, wobei das Mittel zum Steuern der ersten 3D-Kamera in dem Notdienstfahrzeug positioniert ist; und
i. computerausführbare Befehle (126, 220), die von dem Prozessor gelesen werden können und die Aufgabe haben, Folgendes zu tun:
i. Benutzen des ersten Ortsbestimmungsmittels und des zweiten Ortsbestimmungsmittels zum Ermitteln, wie lange das erste Fahrzeug zum Erreichen der Kreuzung brauchen wird;
ii. Anzeigen eines Countdown (128, 222), bis das Verkehrssignal auf Rot wechselt, wobei der Countdown auf dem ersten Anzeigemittel angezeigt wird;
iii. Ermitteln, ob das erste Fahrzeug die Kreuzung passieren wird, bevor das Verkehrssignal auf Rot wechselt, jeweils auf der Basis des Orts des ersten Fahrzeugs und des Verkehrssignals und der Geschwindigkeit des ersten Fahrzeugs;
iv. Benutzen des ersten Anzeigemittels zum Alarmieren des Fahrers des ersten Fahrzeugs, an der Kreuzung zu stoppen, wenn festgestellt wird, dass das erste Fahrzeug die Kreuzung nicht passieren wird, bevor das Verkehrssignal auf Rot wechselt, oder die Kreuzung zu überqueren, wenn festgestellt wird, dass das erste Fahrzeug die Kreuzung passieren wird, bevor das Verkehrssignal auf Rot wechselt;
v. Benutzen der zweiten 3D-Kamera, um zu ermitteln, ob das erste Fahrzeug mit dem Objekt vor dem ersten Fahrzeug kollidieren wird, auf der Basis der Position und Geschwindigkeit des ersten Fahrzeugs sowie der Position und Geschwindigkeit des Objekts vor dem ersten Fahrzeug;
vi. Benutzen des ersten Anzeigemittels zum Alarmieren (130, 224) des Fahrers des ersten Fahrzeugs zu stoppen, wenn festgestellt wird, dass das erste Fahrzeug mit dem Objekt vor dem ersten Fahrzeug kollidieren wird;
vii. Benutzen des zweiten Anzeigemittels zum Anzeigen des von der ersten 3D-Kamera erfassten Videos oder Bildes (132, 310);
viii. Zulassen, dass ein Fahrer oder Beifahrer des Notdienstfahrzeugs das Mittel zum Steuern der ersten 3D-Kamera zum Steuern der ersten 3D-Kamera benutzt;
ix. Benutzen der ersten 3D-Kamera zum Ermitteln eines Verkehrszustands an der Kreuzung und zum Anzeigen der Feststellung (134, 320) auf dem zweiten Anzeigemittel;
x. Ermitteln, auf der Basis des Verkehrszustands an der Kreuzung, einer besten Route (136, 322) für das Notdienstfahrzeug zu einem Notfallort; und
xi. Benutzen des zweiten Anzeigemittels zum Anzeigen der besten Route.

2. System nach Anspruch 1, wobei das System mehrere Prozessoren, erste Ortsbestimmungsmittel, zweite Ortsbestimmungsmittel, erste 3D-Kameras, zweite 3D-Kameras, erste Anzeigemittel, zweite Anzeigemittel, Mittel zum Steuern der ersten 3D-Kameras und computerausführbare Befehle umfasst, die über mehrere Fahrzeuge, Notdienstfahrzeuge und Kreuzungen in einer Stadt positioniert sind.

3. System nach Anspruch 1, wobei das erste Ortsbestimmungsmittel und das zweite Ortsbestimmungsmittel jeweils einen Empfänger eines globalen Positionierungssystems umfassen.

4. System nach Anspruch 1, wobei die erste 3D-Kamera und die zweite 3D-Kamera jeweils eine Streifenlichtkamera umfassen.

5. System nach Anspruch 1, wobei die computerausführbaren Befehle Obj ekterkennungssoftware umfassen.

6. System nach Anspruch 1, das ferner mehrere drahtlose Kommunikationsmittel umfasst, wobei der Prozessor, das erste und das zweite Ortsbestimmungsmittel, die erste und die zweite 3D-Kamera sowie das erste und das zweite Anzeigemittel und die Mittel zum Steuern der ersten 3D-Kamera jeweils mit einem der mehreren drahtlosen Kommunikationsmittel verbunden sind und wobei die drahtlosen Kommunikationsmittel die Aufgabe haben, elektronische Kommunikation zwischen dem Prozessor, dem ersten und zweiten Ortsbestimmungsmittel, der ersten und der zweiten 3D-Kamera sowie dem ersten und dem zweiten Anzeigemittel und dem Mittel zum Steuern der ersten 3D-Kamera zu erleichtern.

7. System nach Anspruch 1, wobei die Kreuzung mit einem Verkehrssignal assoziiert ist und der Verkehrszustand mit einem Unfall assoziiert ist, der sich an der Kreuzung ereignet hat.

8. System nach Anspruch 7, wobei das System mehrere Prozessoren, 3D-Kameras, Anzeigemittel und computerausführbare Befehle umfasst, die über mehrere Notdienstfahrzeuge und Kreuzungen in einer Stadt verteilt sind.

9. System nach Anspruch 7, wobei die erste 3D-Kamera eine Streifenlichtkamera umfasst.

10. System nach Anspruch 7, wobei die computerausführbaren Befehle Obj ekterkennungssoftware umfassen.

11. System nach Anspruch 7, das ferner mehrere drahtlose Kommunikationsmittel umfasst, wobei der Prozessor, die erste 3D-Kamera und das zweite Anzeigemittel jeweils mit einem der mehreren drahtlosen Kommunikationsmittel verbunden sind, und wobei die drahtlosen Kommunikationsmittel die Aufgabe haben, elektronische Kommunikation zwischen der ersten 3D-Kamera, dem Prozessor und dem zweiten Anzeigemittel zu erleichtern.

12. System nach Anspruch 7, wobei das Zulassen, dass ein Fahrer oder Beifahrer des Notdienstfahrzeugs das Mittel zum Steuern der ersten 3D-Kamera zum Steuern der ersten 3D-Kamera benutzt, das Zulassen beinhaltet, dass ein Fahrer oder Beifahrer des Notdienstfahrzeugs das Mittel zum Steuern der ersten 3D-Kamera zum Zoomen der 3D-Kamera, zum Ändern der Position der ersten 3D-Kamera oder zum Ändern der Richtung benutzt, in die die erste 3D-Kamera zeigt.

13. System nach Anspruch 7, wobei das Benutzen der ersten 3D-Kamera zum Ermitteln, ob sich ein Unfall an der Kreuzung ereignet hat, das Benutzen von Objekterkennungssoftware zum Analysieren eines von der ersten 3D-Kamera erfassten Bildes oder Videos und zum Ermitteln beinhaltet, ob Fahrzeuge auf der Kreuzung unregelmäßig positioniert sind.

14. System nach Anspruch 7, wobei das Benutzen der ersten 3D-Kamera zum Ermitteln eines Verkehrszustands an der Kreuzung das Benutzen von Objekterkennungssoftware zum Analysieren eines von der ersten 3D-Kamera erfassten Bildes oder Videos und zum Ermitteln von Geschwindigkeit und Anzahl von die Kreuzung passierenden Fahrzeugen beinhaltet.

## Revendications

1. Un système de gestion de services d'urgence et de trafic complet et intelligent (100, 200, 300) comprenant :
a au moins un processeur (102, 202, 302),
b. un premier moyen de détermination d'emplacement (104, 204) électroniquement raccordé au processeur, positionné sur ou près d'un feu de circulation (106, 206, 306) au niveau d'une intersection (108, 208, 308), et conçu de façon à déterminer l'emplacement du feu de circulation,
c. un deuxième moyen de détermination d'emplacement (110, 210) électroniquement raccordé au processeur, positionné sur un premier véhicule (112, 212), et conçu de façon à déterminer un emplacement et une vitesse du premier véhicule,
d. une première caméra 3D (114, 304) électroniquement raccordée au processeur et positionnée sur ou près du feu de circulation, où le champ de vision de la première caméra 3D englobe la totalité ou une partie de l'intersection, et où la première caméra 3D est conçue de façon à capturer une image ou une vidéo (132, 310) de l'intersection et à détecter la présence d'un véhicule ou d'un piéton (311) près de l'intersection,
e. une deuxième caméra 3D (116, 214) électroniquement raccordée au processeur et positionnée sur le premier véhicule, où la deuxième caméra 3D est conçue de façon à détecter la présence, la vitesse et la position d'un objet (118, 216) devant le premier véhicule,
f. un premier moyen d'affichage (120, 218) électroniquement raccordé au processeur et positionné à l'intérieur du premier véhicule, où le premier moyen d'affichage est visible par un conducteur du premier véhicule,
g. un deuxième moyen d'affichage (122, 312) électroniquement raccordé au processeur et positionné à l'intérieur d'un véhicule de services d'urgence (123, 314), où le deuxième moyen d'affichage est visible par un conducteur du véhicule de services d'urgence,
h. un moyen de commande (124, 316) de la première caméra 3D électroniquement raccordé au processeur, où le moyen de commande de la première caméra 3D est positionné à l'intérieur du véhicule de services d'urgence, et
i. des instructions exécutables par ordinateur (126, 220) lisibles par le processeur et conçues de façon à :
i. utiliser le premier moyen de détermination d'emplacement et le deuxième moyen de détermination d'emplacement de façon à déterminer le temps qu'il faudra au premier véhicule pour atteindre l'intersection,
ii. afficher un compte à rebours (128, 222) jusqu'au moment où le feu de circulation présente un feu rouge, où le compte à rebours est affiché sur le premier moyen d'affichage,
iii. déterminer si le premier véhicule passera au-delà de l'intersection avant que le feu de circulation ne présente un feu rouge en fonction des emplacements du premier véhicule et du feu de circulation et de la vitesse du premier véhicule,
iv. utiliser le premier moyen d'affichage de façon à alerter le conducteur du premier véhicule de s'arrêter au niveau de l'intersection s'il est déterminé que le premier véhicule ne passera pas au-delà de l'intersection avant que le feu de circulation ne présente un feu rouge, ou passera au-delà de l'intersection s'il est déterminé que le premier véhicule passera au-delà de l'intersection avant que le feu de circulation ne présente un feu rouge,
v. utiliser la deuxième caméra 3D de façon à déterminer si le premier véhicule entrera en collision avec l'objet devant le premier véhicule en fonction de la position et de la vitesse du premier véhicule et de la position et de la vitesse de l'objet devant le premier véhicule,
vi. utiliser le premier moyen d'affichage de façon à alerter (130, 224) le conducteur du premier véhicule de s'arrêter s'il est déterminé que le premier véhicule entrera en collision avec l'objet devant le premier véhicule,
vii. utiliser le deuxième moyen d'affichage de façon à afficher la vidéo ou l'image (132, 310) capturée par la première caméra 3D,
viii. autoriser un conducteur ou un passager du véhicule de services d'urgence à utiliser le moyen de commande de la première caméra 3D de façon à commander la première caméra 3D,
ix. utiliser la première caméra 3D de façon à déterminer une condition de trafic au niveau de l'intersection, et afficher la détermination (134, 320) sur le deuxième moyen d'affichage,
x. en fonction de la condition de trafic au niveau de l'intersection, déterminer un meilleur itinéraire (136, 322) à prendre par le véhicule de services d'urgence vers une urgence, et
xi. utiliser le deuxième moyen d'affichage de façon à afficher le meilleur itinéraire.

2. Le système selon la Revendication 1, où le système comprend une pluralité de processeurs, un premier moyen de détermination d'emplacement, un deuxième moyen de détermination d'emplacement, des premières caméras 3D, des deuxièmes caméras 3D, un premier moyen d'affichage, un deuxième moyen d'affichage, un moyen de commande des premières caméras 3D et des instructions exécutables par ordinateur positionnés sur la totalité d'une pluralité de véhicules, de véhicules de services d'urgence et d'intersections dans une ville.

3. Le système selon la Revendication 1, où le premier moyen de détermination d'emplacement et le deuxième moyen de détermination d'emplacement comprennent chacun un récepteur de système de positionnement global.

4. Le système selon la Revendication 1, où la première caméra 3D et la deuxième caméra 3D comprennent chacune une caméra à lumière structurée.

5. Le système selon la Revendication 1, où les instructions exécutables par ordinateur comprennent un logiciel de reconnaissance d'objets.

6. Le système selon la Revendication 1, comprenant en outre une pluralité de moyens de communication sans fil, où le processeur, les premier et deuxième moyens de détermination d'emplacement, les premières et deuxièmes caméras 3D et les premier et deuxième moyens d'affichage et le moyen de commande de la première caméra 3D sont chacun raccordés à un moyen de communication sans fil de la pluralité de moyens de communication sans fil, et où les moyens de communication sans fil sont conçus de façon à faciliter une intercommunication électronique entre le processeur, les premier et deuxième moyens de détermination d'emplacement, les premières et deuxièmes caméras 3D et les premier et deuxième moyens d'affichage et le moyen de commande de la première caméra 3D.

7. Le système selon la Revendication 1, où l'intersection est associée à un feu de circulation et la condition de trafic est associée à un accident qui a eu lieu au niveau de l'intersection.

8. Le système selon la Revendication 7, où le système comprend une pluralité de processeurs, des caméras 3D, un moyen d'affichage et des instructions exécutables par ordinateur positionnés sur la totalité d'une pluralité de véhicules de services d'urgence et d'intersections dans une ville.

9. Le système selon la Revendication 7, où la première caméra 3D comprend une caméra à lumière structurée.

10. Le système selon la Revendication 7, où les instructions exécutables par ordinateur comprennent un logiciel de reconnaissance d'objets.

11. Le système selon la Revendication 7, comprenant en outre une pluralité de moyens de communication sans fil, où le processeur, la première caméra 3D et le deuxième moyen d'affichage sont chacun raccordés à un moyen de communication sans fil de la pluralité de moyens de communication sans fil, et où les moyens de communication sans fil sont conçus de façon à faciliter une intercommunication électronique entre la première caméra 3D, le processeur et le deuxième moyen d'affichage.

12. Le système selon la Revendication 7, où l'autorisation donnée à un conducteur ou à un passager du véhicule de services d'urgence d'utiliser le moyen de commande de la première caméra 3D de façon à commander la première caméra 3D comprend l'autorisation donnée à un conducteur ou à un passager du véhicule de services d'urgence d'utiliser le moyen de commande de la première caméra 3D de façon à zoomer la caméra 3D, à modifier la position de la première caméra 3D ou à modifier la direction dans laquelle pointe la première caméra 3D.

13. Le système selon la Revendication 7, où l'utilisation de la première caméra 3D de façon à déterminer si un accident a eu lieu au niveau de l'intersection comprend l'utilisation d'un logiciel de reconnaissance d'objets destiné à analyser une image ou une vidéo capturée par la première caméra 3D et à déterminer si des véhicules donnés sont positionnés de manière irrégulière dans l'intersection.

14. Le système selon la Revendication 7, où l'utilisation de la première caméra 3D de façon à déterminer une condition de trafic au niveau de l'intersection comprend l'utilisation d'un logiciel de reconnaissance d'objets destiné à analyser une image ou une vidéo capturée par la première caméra 3D et à déterminer la vitesse et le nombre de véhicules passant au-delà de l'intersection.
